(19) Europäisches Patentamt / European Patent Office / Office européen des brevets

(11) **EP 4 535 632 A1**

(12) **EUROPEAN PATENT APPLICATION**

(43) Date of publication:
**09.04.2025 Bulletin 2025/15**

(21) Application number: **23201763.2**

(22) Date of filing: **05.10.2023**

(51) International Patent Classification (IPC):
**H02M 1/00** *(2006.01)*      **H02M 3/00** *(2006.01)*
**H02M 3/335** *(2006.01)*

(52) Cooperative Patent Classification (CPC):
**H02M 3/33523; H02M 1/0009; H02M 1/0095;
H02M 3/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tridonic GmbH & Co. KG
6851 Dornbirn (AT)**

(72) Inventors:
• **Schneider, Miguel Philipp
6850 Dornbirn (AT)**

• **Saccavini, Lukas
6850 Dornbirn (AT)**
• **Auer, Hans
6850 Dornbirn (AT)**
• **Romano, Fabio
6850 Dornbirn (AT)**
• **Stark, Stefan
6850 Dornbirn (AT)**
• **Kucera, Clemens
6850 Dornbirn (AT)**

(74) Representative: **Rupp, Christian
Mitscherlich PartmbB
Patent- und Rechtsanwälte
Karlstraße 7
80333 München (DE)**

(54) **RESONANT HYBRID FLYBACK CONVERTER FOR A LIGHT SOURCE, AND LUMINAIRE**

(57)      Disclosed is a resonant hybrid flyback converter (1) for a light source (4). The converter (1) comprises a transformer (101, 102), comprising a primary-side inductance (101, $L_p$) and a secondary-side inductance (102, $L_s$); a high-side switch (104) and a low-side switch (105), connected in series between an input electric potential and a primary-side ground electric potential of the converter (1); a resonant tank circuit (101, 101", 106), connected in series between a common electric potential of the switches (104, 105) and the primary-side ground electric potential, wherein the resonant tank circuit (101, 101", 106) comprises the primary-side inductance (101, $L_p$). The converter (1) further comprises a current sensing circuit, configured to sense a positive peak current (301, $I_{magpos}$) through the primary-side inductance (101, $L_p$); a voltage sensing circuit (103, 107-110), configured to sense a voltage (302, $V_{Lmsec}$; 302', $V_{Lmpri}$) across an inductance (101, 102) of the transformer (101, 102); and a control circuit, configured to estimate a current (303, $I_{LEDest}$) through the light source (4) in accordance with the positive peak current (301, $I_{magpos}$) through the primary-side inductance (101, $L_p$) and the voltage (302, $V_{Lmsec}$; 302', $V_{Lmpri}$) across the inductance (101, 102) of the transformer (101, 102); and regulate the current (305, $I_{LED}$) through the light source (4) in accordance with a setpoint value (304, $I_{LEDref}$) and the estimated current (303, $I_{LEDest}$) through the light source (4). This avoids a sensing of the current (305, $I_{LED}$) through the light source (4) and an associated signal transfer across a SELV barrier of the converter (1).

FIG. 2

## Description

## Technical Field

The present disclosure relates generally to the field of lighting technology, and in particular to a resonant hybrid flyback converter implementing a primary-side current sensing, and to a luminaire comprising the converter.

## Background Art

In resonant hybrid flyback converters, a direct current (DC) input voltage is intermittently applied across a resonant tank circuit. The resonant tank circuit may, for example, comprise a transformer's main inductance and leakage inductance (or a separate resonance choke) and a resonance capacitance in series.

An on-time control of a high-side switch of the switching bridge may be deployed for regulation (i.e., closed-loop control) of a load current of the converter in accordance with corresponding setpoint and measurement values. A sensing of the latter typically involves a relatively expensive signal transfer across a safety extra low voltage (SELV) barrier of the converter.

## Summary

It is an object to overcome the above-mentioned and other drawbacks.

The foregoing and other objects are achieved by the features of the independent claims. Further implementation forms are apparent from the dependent claims, the description and the figures.

According to a first aspect, a resonant hybrid flyback converter is provided for a light source. The converter comprises a transformer, comprising a primary-side inductance and a secondary-side inductance; a high-side switch and a low-side switch, connected in series between an input electric potential and a primary-side ground electric potential of the converter; a resonant tank circuit, connected in series between a common electric potential of the switches and the primary-side ground electric potential, wherein the resonant tank circuit comprises the primary-side inductance. The converter further comprises a current sensing circuit, configured to sense a positive peak current through the primary-side inductance; a voltage sensing circuit, configured to sense a voltage across an inductance of the transformer; and a control circuit, configured to estimate a current through the light source in accordance with the positive peak current through the primary-side inductance and the voltage across the inductance of the transformer; and regulate the current through the light source in accordance with a setpoint value and the estimated current through the light source.

The transformer may further comprise an auxiliary inductance in inductive communication with the primary-side inductance; wherein the voltage sensing circuit may comprise the auxiliary inductance, referenced to the primary-side ground electric potential; a peak current detection circuit, connected in parallel to the auxiliary inductance and comprising a diode and a capacitance; and a resistive voltage divider, connected in parallel to the capacitance.

The voltage across the inductance of the transformer may comprise a voltage across the secondary-side inductance, in turn comprising a divided voltage of the resistive voltage divider, further divided by a turns ratio of the transformer.

The control circuit may further configured to estimate the current through the light source in accordance with the positive peak current through the primary-side inductance, the voltage across the secondary-side inductance, the turns ratio of the transformer, a main inductance of the primary-side inductance, and a constant on-time duration of the low-side switch.

The voltage across the inductance of the transformer may comprise a voltage across the primary-side inductance, in turn comprising a divided voltage of the resistive voltage divider.

The control circuit may further be configured to estimate the current through the light source in accordance with the positive peak current through the primary-side inductance, the voltage across the primary-side inductance, the turns ratio of the transformer, the main inductance of the primary-side inductance, and an on-time duration of the high-side switch.

The control circuit may further be configured to sample the divided voltage of the resistive voltage divider once, more than once, or continuously during the respective on-time duration of the high-side switch; or sample the divided voltage of the resistive voltage divider once, more than once, or continuously during the respective on-time duration of the low-side switch.

For regulating the current through the light source in accordance with a setpoint value and the estimated current through the light source, the control circuit may further be configured to regulate the current through the light source in accordance with a setpoint value, the estimated current through the light source, and an on-time control of the high-side switch.

For regulating the current through the light source in accordance with a setpoint value and the estimated current through the light source, the control circuit may further be configured to regulate the current through the light source in accordance with a setpoint value, the estimated current through the light source, and a peak current control of the high-side switch in accordance with the positive peak current through the primary-side inductance.

According to a second aspect, a luminaire is provided, comprising a light source; and a resonant hybrid flyback converter of the first aspect for the light source.

The light source may comprise at least one light-emitting diode, LED.

**Brief Description of Drawings**

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.

FIG. 1   illustrates a converter in accordance with the present disclosure;

FIG. 2   illustrates electrical quantities of the converter of FIG. 1;

FIG. 3   illustrates a closed-loop control of the converter of FIG. 1 adapted for on-time control; and

FIG. 4   illustrates a closed-loop control of the converter of FIG. 1 adapted for peak control.

**Detailed Descriptions of Drawings**

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

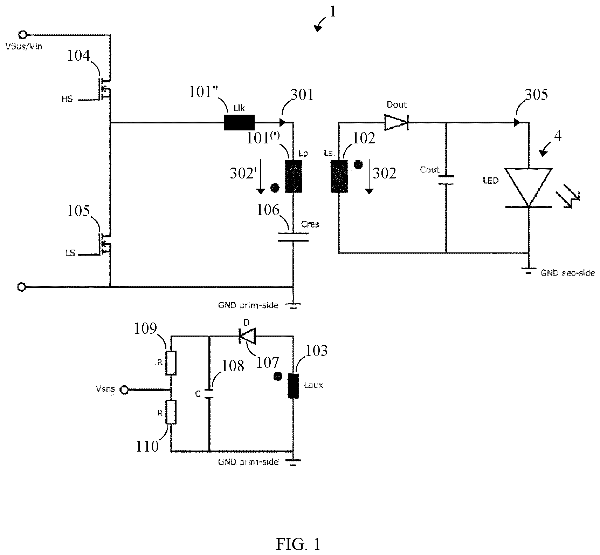

FIG. 1 illustrates a converter 1 in accordance with the present disclosure.

Technically, the converter 1 comprises a resonant hybrid flyback converter 1 for a light source 4, which may comprise at least one light-emitting diode (LED).

A resonant hybrid flyback converter as used herein may refer to a combination of a flyback converter (wherein a square-wave voltage is applied to a primary-side inductance of a transformer) and a resonant converter (wherein the square-wave voltage is applied to a resonant tank circuit), wherein the resonant tank circuit includes the primary-side inductance.

In the non-limiting example of FIG. 1, the converter 1 and the light source 4 form part of a luminaire 1,4.

The converter 1 comprises a transformer 101, 102, including a primary-side inductance 101, $L_p$ and a secondary-side inductance 102, $L_s$. The primary-side inductance 101, $L_p$ may in turn comprise a main inductance 101', $L_m$ and a leakage inductance 101", $L_{lk}$.

The transformer 101, 102 may further comprise an auxiliary inductance 103, $L_{aux}$ in inductive communication with the primary-side inductance 101, $L_p$

The converter 1 further comprises a high-side (HS) switch 104 and a low-side (LS) switch 105, connected in series between an input electric potential and a primary-side ground electric potential of the converter 1. The switches 104, 105 may form part of a switching half-bridge (HB) or full bridge (FB), for example.

The converter 1 further comprises a resonant tank circuit 101, 106, connected in series between a common electric potential of the switches 104, 105 and the primary-side ground electric potential.

The resonant tank circuit 101, 106 comprises the primary-side inductance 101, $L_p$ or more precisely, its main inductance 101', $L_m$, its leakage/resonance inductance 101", $L_{lk}$, and a resonance capacitance 106, $C_{res}$. (i.e., an LLC resonant tank).

In the non-binding example, of FIG. 1, the converter 1 further comprises a half-wave rectifying and smoothing circuit including a diode $D_{out}$ and a capacitance $C_{out}$.

The converter 1 further comprises a current sensing circuit (not shown), configured to sense a positive peak current 301, $I_{magpos}$ through the primary-side inductance 101, $L_p$. For example, the current sensing circuit may comprise a shunt resistor arranged in series with the primary-side inductance 101, $L_p$. such that a voltage emerging across the shunt resistor is indicative of the current 301 through the primary-side inductance 101, $L_p$.

The converter 1 further comprises a voltage sensing circuit *103, 107-110,* configured to sense a voltage *302,* $V_{Lmsec}$; *302',* $V_{Lmprim}$ across an inductance *101, 102* of the transformer *101, 102.*

The voltage sensing circuit *103, 107-110* may comprise the auxiliary inductance *103,* $L_{aux}$, referenced to the primary-side ground electric potential; a peak current detection circuit *107, D; 108, C,* connected in parallel to the auxiliary inductance *103,* $L_{aux}$ and comprising a diode *107, D* and a capacitance *108, C*; and a resistive voltage divider *109, R; 110, R,* connected in parallel to the capacitance *108, C.* Note that resistance values of the elements of the resistive voltage divider *109, R; 110, R* do not necessarily coincide.

The converter *1* further comprises a control circuit (not shown) such as an application-specific integrated circuit (ASIC) or the like.

The control circuit is configured to estimate a current *303,* $I_{LEDest}$ through the light source *4* in accordance with the positive peak current *301,* $I_{magpos}$ through the primary-side inductance *101,* $L_p$ and the voltage *302,* $V_{Lmsec}$; *302',* $V_{Lmprim}$ across the inductance *101, 102* of the transformer *101, 102.*

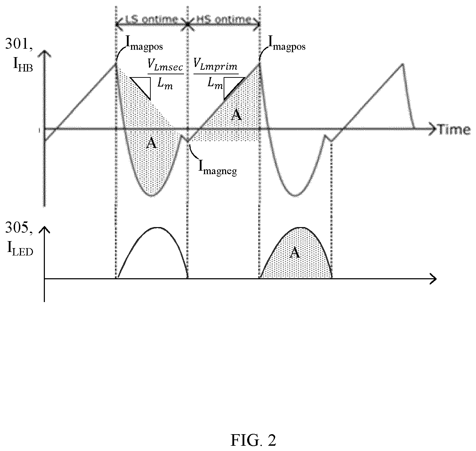

FIG. 2 illustrates electrical quantities of the converter *1* of FIG. 1 over the course of time, namely the (half-bridge) current *301,* $I_{HB}$ through the primary-side inductance *101,* $L_p$ in an upper section and a current *305,* $I_{LED}$ through the light source *4* (i.e., load / LED current) in a lower section.

Note that the hatched areas respectively designated as 'A' correspond to one another in terms of size/area.

Based on the hatched triangular area bounded by the upper curve, it may be derived that:

$$I_{LED} = N \frac{I_{magpos} + I_{magneg}}{2}$$

From the hatched rounded area bounded by the upper curve, it may further be concluded that:

$$I_{magneg} = I_{magpos} - \frac{t_{LSon} V_{Lmsec}}{L_m}$$

$$I_{LED} = \frac{N}{2} \left( 2 I_{magpos} - \frac{t_{LSon} V_{Lmsec}}{L_m} \right)$$

Thus, the voltage across the inductance *101, 102* of the transformer *101, 102* may comprise a voltage *302',* $V_{Lmsec}$ across the secondary-side inductance *102,* $L_s$, in turn comprising the divided voltage $V_{sns}$ of the resistive voltage divider *109, R; 110; R,* further divided by a turns ratio *N* of the transformer *101, 102.*

The control circuit may be configured to sample the divided voltage $V_{sns}$ of the resistive voltage divider *109, R; 110, R* once, more than once, or continuously during a respective on-time duration $t_{HSon}$ of the high-side switch *104,* and may further be configured to average the sampled values of the divided voltage $V_{sns}$.

The control circuit may further be configured to estimate the current *303,* $I_{LEDest}$ through the light source *4* in accordance with the positive peak current *301,* $I_{magpos}$ through the primary-side inductance *101,* $L_p$, the voltage *302',* $V_{Lmsec}$ across the secondary-side inductance *102,* $L_s$, the turns ratio *N* of the transformer *101, 102,* the main inductance *101',* $L_m$ of the primary-side inductance *101,* $L_p$, and a constant on-time duration $t_{LSon}$ of the low-side switch *105.*

Alternatively, it may be inferred from the hatched triangular area bounded by the upper curve that:

$$I_{magneg} = I_{magpos} - \frac{t_{HSon} V_{Lmprim}}{L_m}$$

$$I_{LED} = \frac{N}{2} \left( 2 I_{magpos} - \frac{t_{HSon} V_{Lmprim}}{L_m} \right)$$

Therefore, the voltage across the inductance of the transformer *101, 102* may comprise a voltage *302,* $V_{Lmprim}$ across the primary-side inductance *101,* $L_p$, in turn comprising a divided voltage $V_{sns}$ of the resistive voltage divider *109, R; 110, R.*

The control circuit may be configured to sample the divided voltage $V_{sns}$ of the resistive voltage divider *109, R; 110, R* once, more than once, or continuously during the respective on-time duration $t_{LSon}$ of the low-side switch *105.* Again, the control circuit may be configured to average the sampled values of the divided voltage $V_{sns}$.

The control circuit may further be configured to estimate the current *303,* $I_{LEDest}$ through the light source *4* in accordance with the positive peak current *301,* $I_{magpos}$ through the primary-side inductance *101,* $L_p$, the voltage *302,* $V_{Lmprim}$ across the primary-side inductance *101,* $L_p$, the turns ratio *N* of the transformer *101, 102,* the main inductance *101',* $L_m$ of the primary-side inductance *101,* $L_p$, and an on-time duration $t_{HSon}$ of the high-side switch *104.*

Note that the calculation based on $t_{LSon}$ has the advantage of $t_{LSon}$ having a constant value. For more accurate results, deadtimes should to be taken account of as well.

The control circuit is further configured to regulate the current *305,* $I_{LED}$ through the light source *4* in accordance with a setpoint value *304,* $I_{LEDref}$ and the estimated current *303,* $I_{LEDest}$ through the light source *4.*

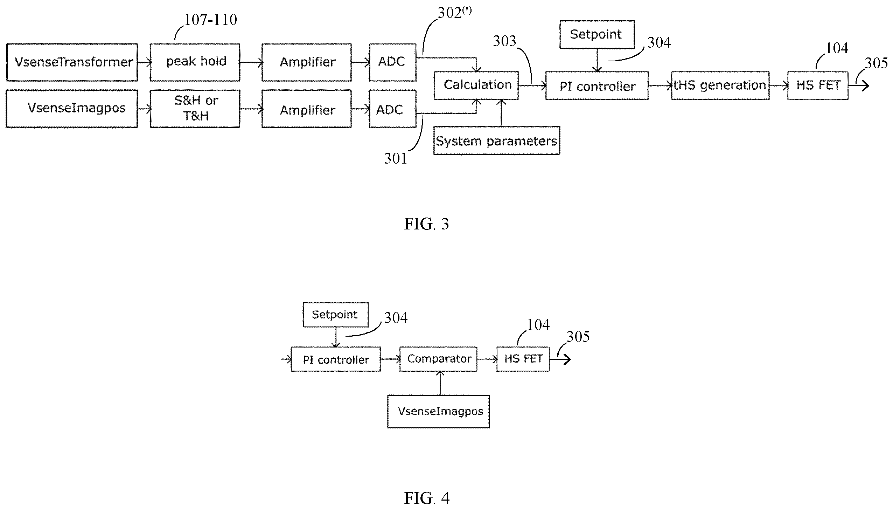

FIG. 3 illustrates a closed-loop control of the converter *1* of FIG. 1 adapted for on-time control.

For regulating the current *305,* $I_{LED}$ through the light source *4* in accordance with a setpoint value *304,* $I_{LEDref}$ and the estimated current *303,* $I_{LEDest}$ through the light source *4,* the control circuit may be configured to regulate the current *305, $I_{LED}$* through the light source *4* in accordance with the setpoint value *304, $I_{LEDref}$*, the estimated current *303, $I_{LEDest}$* through the light source *4*, and an on-time control of the high-side switch *104*.

In other words, the on-time control of the high-side switch *104* may be based on the estimated current *303, $I_{LEDest}$* through the light source *4* rather than on the actual current *305, $I_{LED}$* through the light source *4*.

FIG. 4 illustrates a closed-loop control of the converter *1* of FIG. 1 adapted for peak control.

For regulating the current *305, $I_{LED}$* through the light source *4* in accordance with a setpoint value *304, $I_{LEDref}$* and the estimated current *303, $I_{LEDest}$* through the light source *4*, the control circuit may further be configured to regulate the current *305, $I_{LED}$* through the light source *4* in accordance with a setpoint value *304, $I_{LEDref}$*, the estimated current *303, $I_{LEDest}$* through the light source *4*, and a peak current control of the high-side switch *104* in accordance with the positive peak current *301, $I_{magpos}$* through the primary-side inductance *101, $L_p$*.

That is to say, the peak current control of the high-side switch *104* may be based on a comparison of an instantaneous current *301* through the primary-side inductance *101, $L_p$* and the positive peak current *301, $I_{magpos}$* through the primary-side inductance *101, $L_p$*, wherein the latter serves as a reference. Once the former exceeds the latter, the high-side switch 104 may be switched off.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

**Claims**

1. A resonant hybrid flyback converter (1) for a light source (4), the converter (1) comprising

   a transformer (101, 102), comprising a primary-side inductance (101, Lp) and a secondary-side inductance (102, Ls);

   a high-side switch (104) and a low-side switch (105), connected in series between an input electric potential and a primary-side ground electric potential of the converter (1);
   a resonant tank circuit (101, 101", 106), connected in series between a common electric potential of the switches (104, 105) and the primary-side ground electric potential, the resonant tank circuit (101, 101", 106) comprising the primary-side inductance (101, Lp);
   a current sensing circuit, configured to

       - sense a positive peak current (301, Imagpos) through the primary-side inductance (101, Lp);

   a voltage sensing circuit (103, 107-110), configured to

       - sense a voltage (302', Vlmsec; 302, Vlmpri) across an inductance (101, 102) of the transformer (101, 102); and

   a control circuit, configured to

       - estimate a current (303, ILEDest) through the light source (4) in accordance with the positive peak current (301, Imagpos) through the primary-side inductance (101, Lp) and the voltage (302', Vlmsec; 302, Vlmpri) across the inductance (101, 102) of the transformer (101, 102); and
       - regulate the current (305, ILED) through the light source (4) in accordance with a setpoint value (304, ILEDref) and the estimated current (303, ILEDest) through the light source (4).

2. The converter (1) of claim 1,

   the transformer (101, 102) further comprising an auxiliary inductance (103, Laux) in inductive communication with the primary-side inductance (101, Lp);
   the voltage sensing circuit (103, 107-110) comprising

       the auxiliary inductance (103, Laux), referenced to the primary-side ground electric potential;
       a peak current detection circuit (107, D; 108, C), connected in parallel to the auxiliary inductance (103, Laux) and comprising a diode (107, D) and a capacitance (108, C); and
       a resistive voltage divider (109, R; 110, R), connected in parallel to the capacitance (108, C).

**3.** The converter (1) of claim 2,
the voltage across the inductance of the transformer (101, 102) comprising
a voltage (302', Vlmsec) across the secondary-side inductance (102, Ls), in turn comprising
a divided voltage (Vsns) of the resistive voltage divider (109, R; 110; R), further divided by a turns ratio (N) of the transformer (101, 102).

**4.** The converter (1) of claim 3,
the control circuit further configured to

- estimate the current (303, ILEDest) through the light source (4) in accordance with the positive peak current (301, Imagpos) through the primary-side inductance (101, Lp), the voltage (302', Vlmsec) across the secondary-side inductance (102, Ls), the turns ratio (N) of the transformer (101, 102), a main inductance (101', Lm) of the primary-side inductance (101, Lp), and a constant on-time duration (tLSon) of the low-side switch (105).

**5.** The converter (1) of claim 2,
the voltage across the inductance of the transformer (101, 102) comprising
a voltage (302, Vlmpri) across the primary-side inductance (101, Lp), in turn comprising
a divided voltage (Vsns) of the resistive voltage divider (109, R; 110, R).

**6.** The converter (1) of claim 5,
the control circuit further configured to

- estimate the current (303, ILEDest) through the light source (4) in accordance with the positive peak current (301, Imagpos) through the primary-side inductance (101, Lp), the voltage (302, Vlmpri) across the primary-side inductance (101, Lp), the turns ratio (N) of the transformer (101, 102), the main inductance (101', Lm) of the primary-side inductance (101, Lp), and an on-time duration (tHSon) of the high-side switch (104).

**7.** The converter (1) of any one of claims 3 - 6,
the control circuit further being configured to

- sample the divided voltage (Vsns) of the resistive voltage divider (109, R; 110, R) once, more than once, or continuously during the respective on-time duration (tHSon) of the high-side switch (104); or
- sample the divided voltage (Vsns) of the resistive voltage divider (109, R; 110, R) once, more than once, or continuously during the respective on-time duration (tLSon) of the low-side switch (105).

**8.** The converter (1) of any one of the claims 1 - 7,
wherein for regulating the current (305, ILED) through the light source (4) in accordance with a setpoint value (304, ILEDref) and the estimated current (303, ILEDest) through the light source (4), the control circuit further being configured to

- regulate the current (305, ILED) through the light source (4) in accordance with a setpoint value (304, ILEDref), the estimated current (303, ILEDest) through the light source (4), and an on-time control of the high-side switch (104).

**9.** The converter (1) of any one of the claims 1 - 7,
wherein for regulating the current (305, ILED) through the light source (4) in accordance with a setpoint value (304, ILEDref) and the estimated current (303, ILEDest) through the light source (4), the control circuit further being configured to

- regulate the current (305, ILED) through the light source (4) in accordance with a setpoint value (304, ILEDref), the estimated current (303, ILEDest) through the light source (4), and a peak current control of the high-side switch (104) in accordance with the positive peak current (301, Imagpos) through the primary-side inductance (101, Lp).

**10.** A luminaire (1, 4), comprising

a light source (4); and
a resonant hybrid flyback converter (1) of any one of claims 1 - 9 for the light source (4).

**11.** The luminaire (1, 4) of claim 10,
the light source (4) comprising at least one light-emitting diode, LED.

FIG. 1

FIG. 2

VsenseTransformer → peak hold → Amplifier → ADC → Calculation → PI controller → tHS generation → HS FET →

107-110

302$^{(')}$

303

Setpoint → 304

104

305

VsenseImagpos → S&H or T&H → Amplifier → ADC →

System parameters

301

**FIG. 3**

Setpoint → 304

104

305

PI controller → Comparator → HS FET →

VsenseImagpos

**FIG. 4**

Europäisches
Patentamt
European
Patent Office
Office européen
des brevets

# EUROPEAN SEARCH REPORT

Application Number

EP 23 20 1763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 220 925 A1 (TRIDONIC GMBH & CO KG [AT]) 2 August 2023 (2023-08-02) * paragraph [0042] - paragraph [0046]; figure 2 * | 1-11 | INV. H02M1/00 H02M3/00 H02M3/335 |
| Y | LEE YI-JING ET AL: "A Digital Power Factor Controller for Primary-Side-Regulated LED Driver", IEEE ACCESS, IEEE, USA, vol. 8, 10 January 2020 (2020-01-10), pages 21813-21822, XP011770241, DOI: 10.1109/ACCESS.2020.2966016 [retrieved on 2020-02-03] * figures 3, 4 * | 1-11 | |
| Y | ZHANG SHU ET AL: "A high performance primary-side-regulated LED driver based on single-stage SEPIC-flyback converter", 2016 IEEE INDUSTRIAL ELECTRONICS AND APPLICATIONS CONFERENCE (IEACON), IEEE, 20 November 2016 (2016-11-20), pages 26-30, XP033164695, DOI: 10.1109/IEACON.2016.8067350 [retrieved on 2017-10-12] * figures 1, 2, 3, 6 * | 1-11 | |

-/--

|  |  |  |
|---|---|---|
|  |  | TECHNICAL FIELDS SEARCHED (IPC) |
|  |  | H02M H05B |

The present search report has been drawn up for all claims

| Place of search | Date of completion of the search | Examiner |
|---|---|---|
| The Hague | 19 March 2024 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 20 1763

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DONG HANJING ET AL: "A Novel Primary-Side Regulation Control Scheme for CCM and DCM LLC LED Driver Based on "Magnetizing Current Cancellation Method"", IEEE TRANSACTIONS ON POWER ELECTRONICS, INSTITUTE OF ELECTRICAL AND ELECTRONICS ENGINEERS, USA, vol. 35, no. 11, 20 April 2020 (2020-04-20), pages 12223-12237, XP011801415, ISSN: 0885-8993, DOI: 10.1109/TPEL.2020.2989169 [retrieved on 2020-07-28] * figures 2, 3 * | 1-11 | |
| A | EP 4 131 750 A1 (INFINEON TECHNOLOGIES AUSTRIA AG [AT]) 8 February 2023 (2023-02-08) * paragraph [0045] – paragraph [0047]; figures 4-6 * | 1-11 | |
| A | JEONG G-Y: "High efficiency asymmetrical half-bridge flyback converter using a new voltage-driven synchronous rectifier", THE INSTITUTION OF ENGINEERING AND TECHNOLOGY. JOURNAL,, vol. 3, no. 1, 1 January 2010 (2010-01-01), pages 18-32, XP006034228, ISSN: 1755-4543, DOI: 10.1049/IET-PEL:20080306 * Chapter 2.2 * | 1-11 | |

TECHNICAL FIELDS SEARCHED (IPC)

The present search report has been drawn up for all claims

| Place of search | Date of completion of the search | Examiner |
|---|---|---|
| The Hague | 19 March 2024 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 1763

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | | Publication date |
|---|---|---|---|---|---|
| EP 4220925 | A1 | 02-08-2023 | EP | 4220925 A1 | 02-08-2023 |
| | | | WO | 2023144037 A1 | 03-08-2023 |
| EP 4131750 | A1 | 08-02-2023 | CN | 115706531 A | 17-02-2023 |
| | | | EP | 4131750 A1 | 08-02-2023 |
| | | | US | 2023042664 A1 | 09-02-2023 |

EPO FORM P0459

For more details about this annex : see Official Journal of the European Patent Office, No. 12/82